(19) Europäisches Patentamt
European Patent Office
Office européen des brevets

(11) **EP 3 912 203 B1**

(12) **EUROPÄISCHE PATENTSCHRIFT**

(45) Veröffentlichungstag und Bekanntmachung des Hinweises auf die Patenterteilung:
**01.03.2023 Patentblatt 2023/09**

(21) Anmeldenummer: **19703005.9**

(22) Anmeldetag: **16.01.2019**

(51) Internationale Patentklassifikation (IPC):
*H01M 50/503* (2021.01)    *H01M 50/213* (2021.01)
*H01M 50/516* (2021.01)    *H01M 10/04* (2006.01)

(52) Gemeinsame Patentklassifikation (CPC):
**H01M 10/0404; H01M 10/0409; H01M 50/213; H01M 50/503; H01M 50/516;** Y02E 60/10; Y02P 70/50

(86) Internationale Anmeldenummer:
**PCT/DE2019/100036**

(87) Internationale Veröffentlichungsnummer:
**WO 2020/147869 (23.07.2020 Gazette 2020/30)**

(54) **BATTERIEZELLENMODUL, POSITIONIERVORRICHTUNG ZUR HERSTELLUNG VON BATTERIEZELLENMODULEN UND VERFAHREN ZUR HERSTELLUNG VON BATTERIEZELLENMODULEN**

BATTERY CELL MODULE, POSITIONING DEVICE FOR PRODUCING BATTERY CELL MODULES AND METHOD FOR PRODUCING BATTERY CELL MODULES

MODULE D'ÉLÉMENTS DE BATTERIE, DISPOSITIF DE POSITIONNEMENT POUR PRODUIRE DES MODULES D'ÉLÉMENTS DE BATTERIE ET PROCÉDÉ POUR PRODUIRE DES MODULES D'ÉLÉMENTS DE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.11.2021 Patentblatt 2021/47**

(73) Patentinhaber: **SCIO Technology GmbH 63743 Aschaffenburg (DE)**

(72) Erfinder: **WEIS, Alexander 63768 Hösbach (DE)**

(74) Vertreter: **Angerhausen, Christoph Boehmert & Boehmert Anwaltspartnerschaft mbB Pettenkoferstrasse 22 80336 München (DE)**

(56) Entgegenhaltungen:
**EP-A1- 1 689 009       US-A1- 2009 297 892 US-A1- 2011 223 776**

**Beschreibung**

Die Erfindung bezieht sich auf ein Batteriezellenmodul zum Speichern von elektrischer Energie, insbesondere für den Einsatz in elektrisch betriebenen Fahrzeugen, beispielsweise Elektroroller, Elektroautos, Elektro-Lkw, Elektro-Nutzfahrzeuge oder dergleichen, oder auch für Storage-Systeme. Das Batteriezellenmodul weist eine Mehrzahl länglicher zylindrischer Batteriezellen auf, welche über Kontaktbleche sowie über Kontaktblechverbinder elektrisch und mechanisch starr miteinander verbunden sind. Die Erfindung bezieht sich ferner auf eine Positioniervorrichtung für die Herstellung eines Batteriezellenmoduls sowie auf ein Verfahren zur Herstellung von Batteriezellenmodulen.

Ein Problem von Batteriezellenmodulen besteht darin, dass sich die Module im Betrieb, insbesondere bei hoher Belastung, stark aufheizen und sich infolgedessen ausdehnen. Diese temperaturabhängigen Volumenänderungen, insbesondere bezogen auf den Außenumfang der Batteriezellen, haben zur Folge, dass die einzelnen Batteriezellen nicht unmittelbar aneinander anliegend nebeneinander angeordnet werden können. Aufgrund des entstehenden Drucks besteht nämlich das Risiko, dass die Zellen, beziehungsweise insbesondere die Zellverbinder, oder das gesamte Modul zu Schaden kommen. Daher muss bei der Fertigung von Batteriezellenmodulen zwischen den Batteriezellen ein Abstand eingehalten werden, welcher sich an der erwarteten thermischen Ausdehnung der einzelnen Batteriezellen orientiert. Gleichzeitig ist es aufgrund von Leistungsanforderungen beziehungsweise von einem steigenden Bedarf an Energiespeicherkapazität einerseits und einem nur limitiert zur Verfügung stehenden Platzangebot in elektrisch betriebenen Fahrzeugen notwendig, so viele Zellen wie möglich auf engem Raum unterzubringen. Ferner ist ein stetiges Ziel von Weiterentwicklungen im Fahrzeugbereich, Material und Gewicht einzusparen, um Kosten zu sparen und die Energieeffizienz zu steigern.

Aus der US 7,332,243 B2 ist ein Batteriezellenmodul bekannt, das eine Mehrzahl zylindrischer Batteriezellen aufweist, welche mittels eines Containers in definierten Relativpositionen zueinander gehalten werden. Hierzu weist der Container separate Unterteilungen für jede der Batteriezellen auf. In diesen werden die Batteriezellen in aufrechter Position voneinander separiert und gleichzeitig versetzt zueinander angeordnet. Der Container dient somit einerseits als Zellhalter und andererseits durch die Einzelaufnahme der einzelnen Batteriezellen als Separator, welcher die Zellen auf Abstand hält. Ähnliche Vorrichtungen sind außerdem bekannt aus der EP 1 689 009 A1, der US 2009/0297892 A1 oder der US 2011/0223776 A1.

Die US 8,519,715 B2 offenbart eine Anlage zum Herstellen von Batteriezellenblöcken. Es ist eine Greifvorrichtung gezeigt, mit welcher mehrere Batteriezellen zeilenweise angehoben und bewegt werden können. Die Greifvorrichtung greift an der Oberseite der zylindrischen Zellen an und bedient sich dabei entweder eines Magneten oder einer Ansaugvorrichtung. Die Greifvorrichtung wird für den Zweck verwendet, Zellen zeilenweise in einen Batteriezellencontainer zu setzen.

Nachteilig ist dabei, dass sowohl für die Herstellung der Batteriemodule, insbesondere für die Positionierung der Batteriezellen für den Schweißvorgang, als auch zum räumlichen Trennen der Batteriezellen voneinander, ein zusätzliches Element in Form des Containers notwendig ist.

Der vorliegenden Erfindung liegt daher die Aufgabe zugrunde, die Nachteile des Standes der Technik zu überwinden, insbesondere ein Batteriezellenmodul für den Einsatz in einem elektrisch betriebenen Fahrzeug dahingehend zu verbessern, dass dieses bei einer besonders kompakten und materialsparenden Bauweise Spannungen aufgrund thermischer Ausdehnungen vermeiden kann.

Erfindungsgemäß wird diese Aufgabe mit den Merkmalen der unabhängigen Ansprüche gelöst.

Weitere vorteilhafte Ausgestaltungen sind in den Unteransprüchen angegeben.

Danach ist erfindungsgemäß vorgesehen, ein Batteriezellenmodul für elektrisch betriebene Fahrzeuge bereitzustellen, welches eine Mehrzahl länglicher zylindrischer Batteriezellen aufweisen kann, deren Längsachsen parallel zueinander ausgerichtet sind, wobei die Batteriezellen so angeordnet sein können, dass eine erste Reihe von Batteriezellen parallel zu einer zweiten Reihe von Batteriezellen verläuft, so dass sich jeweils zwei Batteriezellen paarweise gegenüberliegen, wobei die Batteriezellen jeweils so zueinander positioniert sind, dass die zylindrischen Oberflächen der Batteriezellen nicht in Berührkontakt stehen und jeweils ein Freiraum zwischen den Batteriezellen vorgesehen ist, der für eine erwartete thermisch induzierte Umfangsausdehnung der Batteriezellen ausgelegt ist, wobei die jeweils gegenüberliegenden Batteriezellen mittels zumindest jeweils eines Kontaktblechs elektrisch und mechanisch starr miteinander verbunden sein können. Darüber hinaus können jeweils benachbarte Kontaktbleche mittels jeweils zumindest eines Kontaktblechverbinders elektrisch und mechanisch starr miteinander verbunden sein, wobei die jeweils durch das zumindest eine Kontaktblech miteinander verbundenen Batteriezellen durch das jeweilige, zumindest eine Kontaktblech zueinander beabstandet gehalten werden können. Außerdem können die jeweils durch den zumindest einen Kontaktblechverbinder miteinander verbundenen Batteriezellenpaare durch den jeweiligen, zumindest einen Kontaktblechverbinder zueinander beabstandet gehalten werden. Eine längliche Batteriezelle weist eine relativ zu ihrer Längsausdehnung geringere Ausdehnung in der Ebene senkrecht zu ihrer Längsachse auf. Die Längsachse einer zylindrischen Batteriezelle entspricht ihrer Rotationsachse. Batteriezellenpaare werden über ein Kontaktblech miteinander verbunden, das unmittelbar an beiden Batteriezellen des Batteriezellenpaars befestigt wird. Demgegenüber werden benachbarte Batteriezellen nicht unmittelbar über einen Kontaktblech miteinander verbunden. Benachbarte Batteriezellen sind mittelbar über das Kontaktblech des ersten Batteriezellenpaars, das Kontaktblech des zweiten Batteriezellenpaars und den die Kontaktbleche verbindenden Kontaktblechverbinder miteinander verbunden. Die miteinander verbundenen Kontaktbleche und Kontaktblechverbinder, ob verschweißt oder einstückig ausgeführt, können auch gemeinsam als Zellverbinder bezeichnet werden. Durch den Einsatz des Zellverbinders oder der Zellverbinder benötigt das Batteriezellenmodul keinen zusätzlichen Zellhalter, welcher die Positionierung der Zellen zueinander festlegt. Durch den Einsatz eines oder mehrerer Zellverbinder ist ferner kein zusätzliches Mittel notwendig, welches für eine Beabstandung der einzelnen Zellen sorgt, beziehungsweise die Zellen auf einem vordefinierten Abstand zueinander hält.

Ein Batteriezellenmodul ist beispielsweise in horizontaler Richtung beliebig skalierbar, dass es eine unterschiedliche Anzahl an parallelen Zellen aufweisen kann. So können mindestens zwei gegenüberliegende Zellen verschweißt werden oder ein vielfaches davon, ohne eine maximale Anzahl festlegen zu müssen. Werden eine kleine Anzahl an Zellen parallel verbaut, zum Beispiel 2, 4, 6, 8, so können beispielsweise kleine Batteriesysteme (Powertools, Robotik, E-Bike) aufgebaut werden. Bei einer mittleren Zahl paralleler Zellen, zum Beispiel 10, 12, 14, 16 können Batteriesysteme für Scooter, Zweiräder oder kleine Fahrzeuge aufgebaut werden. Bei einer großen Anzahl paralleler Zellen, zum Beispiel 18, 20, 22, 24, 26, oder beliebig mehr, können Systeme für Automotiveanwendungen, Storagesysteme und Boote aufgebaut werden. Mehrere Batteriezellenmodule können zu einem sogenannten Makromodul verschaltet werden, welches insbesondere bevorzugt 13 Batteriezellenmodule aufweist. Nach diesem Baukastensystem kann für unterschiedliche Anwendungen, beispielsweise für Elektroroller, Elektroautos oder als Speicherbatterien, die entsprechende Modulgröße bereitgestellt werden. Weiterhin können Makromodule für den Einsatz in branchenspezifischen Gesamtsystemen zu Batteriesystemen zusammengefasst werden, welche beispielsweise 8, 16, 24, 32 oder 40 Makromodule aufweisen. Durch dieses skalierbare, modulare Konzept können Leistungsbereiche und Kapazitäten individuell auf den jeweiligen Anwendungsfall abgestimmt werden.

Es kann vorgesehen sein, dass die Abstände der Längsachsen (X) der Batteriezellen (2) so gewählt sind, dass die Batteriezellen mit ihren äußeren Oberflächen nicht in Berührkontakt stehen, so dass zwischen benachbarten und gegenüberliegenden Batteriezellen jeweils ein Freiraum gebildet ist. Dabei ist das die Zellen verbindende Kontaktblech vorzugsweise so bemessen beziehungsweise so an den Kontaktflächen der Zellen angeschweißt, dass das Kontaktblech ausgehend von den beiden Längsachsen der zu verbindenden Zellen jeweils die Distanz bis zum Außenumfang der jeweiligen Zelle überwindet und darüber hinaus den für die im Betrieb erwartete thermische Ausdehnung einzuhaltenden Zellabstand überbrückt. Außerdem ist vorzugsweise eine Fertigungstoleranz vorzusehen, für den Fall, dass das Kontaktblech von der exakten Lage der Längsachse(n) der Batteriezellen abweichend an den Kontaktflächen befestigt wird oder um Abweichungen in der Positionierung der Zellen zueinander bei der Modulfertigung auszugleichen. Ferner kann eine über die Lebensdauer der Zellen zu erwartende Zellausdehnung für den vorzusehenden Freiraum zwischen den Zellen in der Abstandsbemessung berücksichtigt sein.

Der Abstand bemisst sich aus dem Abstand zwischen den Außenabmessungen der Batteriezellen in der Ebene senkrecht zu deren Längsachsen. Der Abstand kann über die Positionierung der Zellen zueinander eingestellt werden, bevor diese über die Kontaktbleche bzw. die Kontaktblechverbinder starr miteinander verschweißt werden.

Außerdem können die benachbarten Batteriezellenpaare so versetzt zueinander angeordnet sein, dass die erste und die zweite Reihe von Batteriezellen parallel in einer Zickzackform verlaufen. Vorzugsweise wird der Versatz zwischen den einzelnen Batteriezellenpaaren so ausgewählt, dass der Außenumfang einer der Batteriezellen eines ersten Batteriezellenpaars in den Freiraum zwischen den Zellen des benachbarten zweiten Batteriezellenpaars hineinragt und die Längsachse der in den Freiraum ragenden Batteriezelle auf Höhe des Mittelpunkts zwischen den Längsachsen des zweiten Batteriezellenpaars liegt. Dadurch liegt diese Zelle mittig zwischen den Zellen des benachbarten Batteriezellenpaars. Der Vorteil dieser Anordnung besteht darin, dass dadurch der seitliche Abstand der Batteriezellenpaare voneinander minimiert und gleichzeitig der für die thermische Ausdehnung einzuhaltende Freiraum zwischen allen unmittelbar benachbarten Batteriezellen eingehalten werden kann. Die Zickzackform ist so ausgebildet, dass die Ausrichtung benachbarter Kontaktblechverbinder gegenläufig ist und die Ausrichtung eines zu einem Kontaktverbinder übernächsten Kontaktverbinders seiner Ausrichtung entspricht.

Ferner kann die Zickzackform so gewählt sein, dass die Längsachsen aller jeweils aneinander angrenzenden Batteriezellen den gleichen Abstand zueinander aufweisen. Dadurch bilden die Längsachsen dreier benachbarter Batteriezellen jeweils ein gleichseitiges Dreieck.

Darüber hinaus können die Batteriezellen entlang ihrer Längsachsen beabstandet voneinander an ihren Oberseiten und Unterseiten jeweils Kontaktflächen aufweisen, wobei das zumindest eine Kontaktblech der mittels Kontaktblech verbundenen Batteriezellen jeweils an beiden Oberseiten und/oder an beiden Unterseiten an den jeweiligen Kontaktflächen der verbundenen Batteriezellen befestigt, insbesondere verschweißt, sein kann. Als Schweißverfahren kommen vorzugsweise Ultraschallschweißen, Laserschweißen oder Wolfram-Inertgas-Schweißen (WIG) infrage. Eine Batteriezelle der zylindrischen Form weist vorzugsweise einen zylindrischen, um eine Längsachse rotationssymmetrischen Körper auf, der an seiner Oberseite und seiner Unterseite jeweils Kontaktflächen zur Kontaktierung der Zelle aufweist, wobei der Pluspol oder der Minuspol an Ober- oder Unterseite der Batteriezelle vorgesehen sein können.

Ferner kann der zumindest eine Kontaktblechverbinder einstückig mit den durch diesen verbundenen, zueinander benachbarten, Kontaktblechen ausgebildet sein. Der Kontaktblechverbinder kann eine an die Ausrichtung der Batteriezellenpaare zueinander angepasste Form aufweisen. Weisen die Batteriezellenpaare keinen Versatz zueinander auf, kann der Kontaktblechverbinder eine rechteckige Form aufweisen. Weisen die Batteriezellen einen Versatz auf, kann der Kontaktblechverbinder vorzugsweise eine rautenförmige Kontur aufweisen. Der Vorteil an dieser variabel anpassbaren Kontur besteht darin, dass dadurch ein planes Anliegen der an die Seitenflächen der Kontaktbleche angrenzenden Stirnseiten des Kontaktblechverbinders gewährleistet wird.

Es kann weiterhin vorgesehen sein, dass das zumindest eine Kontaktblech zwei Kontaktabschnitte und einen die Kontaktabschnitte verbindenden Mittelsteg aufweist, wobei die Kontaktabschnitte endseitig abgerundet sind. Ferner können die Kontaktabschnitte stufenförmig vom Mittelsteg abgekantet sein, um gegebenenfalls erhöhte Batteriezellenberandungen zu überwinden. Dabei sind die Kontaktabschnitte vorzugsweise in derselben Ebene liegend ausgerichtet. Vorzugsweise sind die Kontaktabschnitte planparallel zu den Kontaktflächen der Batteriezellen ausgerichtet.

Die Kontaktblechverbinder können zusammen mit den Kontaktblechen als einstückiges Blech ausgebildet sein. Alternativ können die Kontaktbleche und die Kontaktblechverbinder separat ausgebildet sein und im Anschluss zu einer Einheit verschweißt oder auf andere Weise elektrisch und mechanisch verbunden werden. Hierzu kann der Kontaktblechverbinder zumindest zwei sich gegenüberliegende Stirnseiten aufweisen, wobei die Stirnseiten jeweils mit Seitenflächen der verbundenen Kontaktbleche verbunden sind. Das einstückige Blech oder die Kontaktbleche sowie die Kontaktblechverbinder separat können in der gewünschten Form ausgestanzt sein.

Weiterhin erfindungsgemäß ist vorgesehen, eine Positioniervorrichtung für die Herstellung von Batteriezellenmodulen für elektrisch betriebene Fahrzeuge bereitzustellen, mit einem Trägerelement zum Halten von einer Mehrzahl an Positionierelementen, wobei zumindest eines der Positionierelemente zumindest eine von dem Trägerelement wegweisende Batteriezellenaufnahme sowie zumindest einen Positionierarm aufweisen kann, welcher mit seiner der Batteriezellenaufnahme abgewandten Seite mit dem Trägerelement verbunden ist, wobei die zumindest eine Batteriezellenaufnahme zum Aufnehmen und/oder Fixieren eines Außenumfangsabschnitts einer länglichen zylindrischen Batteriezelle ausgebildet ist.

Die Positioniervorrichtung hat insbesondere den Vorteil, eine Mehrzahl an Batteriezellen für ein Verschweißen zu einem Batteriezellenmodul so zu positionieren, dass die Batteriezellen durch die Vorrichtung in eine beabstandete Schweißposition relativ zueinander gebracht werden. Durch ein umfangsseitiges Greifen der Batteriezellen kann der Schweißvorgang sowohl an den Oberseiten als auch an den Unterseiten der Zellen erfolgen, während die Batteriezellen von der Positioniervorrichtung gehalten werden.

Das Trägerelement kann eine Anlagefläche aufweisen, welche zum Halten einer Mehrzahl an Positionierelementen ausgebildet ist. Das Trägerelement kann für jedes der Positionierelemente zugeordnete Durchgangsöffnungen aufweisen. Die Durchgangsöffnungen können jeweils in die Batteriezellenaufnahmen münden, um dort zum Ansaugen beziehungsweise Fixieren der jeweiligen Zellen einen Unterdruck zu erzeugen. Die Batteriezellenaufnahme kann ferner zumindest einen Vakuumgreifer aufweisen. Das Trägerelement kann an seiner den Positionierelementen abgewandten Seite ein Vakuumreservoir aufweisen, in welches jeweils die Durchgangsöffnungen münden. Das Vakuumreservoir kann eine nutförmige Ausnehmung sein. Das Vakuumreservoir kann mittels eines Verschlusselements verschlossen werden, welches rückseitig an der Trägerplatte fixiert werden kann. Hierzu kann das Verschlusselement Durchgangsbohrungen aufweisen, welche in korrespondierende Sacklochbohrungen im Trägerelement münden. Zwischen Verschlusselement und Trägerelement kann eine das Vakuumreservoir umgebende Ringdichtung vorgesehen sein, welche das Vakuumreservoir fluiddicht verschließt. Das Verschlusselement kann einen Vakuumanschluss aufweisen. Der Vakuumanschluss kann eine Durchgangsbohrung sein, welche in das Vakuumreservoir mündet. Ferner kann an dem Verschlusselement eine Roboteraufnahme vorgesehen sein, mittels welcher die Positioniervorrichtung von einem Industrieroboter gegriffen werden kann.

Alternativ zur Fixierung der Zellen mittels Vakuum ist auch denkbar, dass die Batteriezellenaufnahmen jeweils zumindest einen Magneten oder Elektromagneten aufweisen, mittels welchen ein umfangsseitiges Greifen der Batteriezellen realisierbar ist.

Beispielsweise kann die Batteriezellenaufnahme einstückig mit dem Positionierarm ausgebildet sein. Die Batteriezellenaufnahme weist vorzugsweise jeweils die Öffnungen umgebende Ansaugelemente auf, welche dazu ausgebildet sind, eine fluiddichte Verbindung zwischen Batteriezellenaufnahme und aufgenommener Batteriezelle herzustellen. Die Batteriezellenaufnahme kann eine zu einem Außenumfangsabschnitt der Batteriezelle komplementäre, insbesondere konkave Form aufweisen. Die Batteriezellenaufnahmen können an ihrem unteren oder oberen Ende jeweils einen Anschlag aufweisen. Der Anschlag dient dazu, von den Batteriezellenaufnahmen aufgenommene Batteriezellen auf eine gemeinsame Höhe zu justieren. Der Anschlag kann als vorspringende Lippe ausgebildet sein, die die Batteriezellenaufnahme am oberen oder unteren Ende begrenzt.

Alternativ zu einem umfangsseitigen Greifen ist denkbar, dass die Zellen jeweils durch ein Einklemmen zwischen jeweils zwei an den Batteriezellenaufnahmen vorgesehenen Greifzangen gehalten werden, welche die Zellen in Längsrichtung von der Oberseite und der Unterseite her einklemmen. Dabei kann zumindest eine der Greifzangen horizontal oder vertikal verstellbar sein, so dass eine Batteriezelle zunächst aufgenommen und anschließend zwischen den Greifzangen fixiert wird. Die Fixierung zwischen den Greifzangen erfolgt dabei so, dass die Greifzangen nur an den Randbereichen der Zellen angreifen, damit ausreichend Raum zum Auflegen und Verschweißen der Kontaktbleche und der Kontaktblechverbinder verbleibt.

Dabei kann die Mehrzahl an Positionierelementen nebeneinander beabstandet auf dem Trägerelement angeordnet sein, wobei die Positionierarme benachbarter Positionierelemente eine Längendifferenz aufweisen, so dass die Batteriezellenaufnahmen unterschiedlich weit vom Trägerelement wegweisen. Der Abstand der Positionierelemente beziehungsweise die Längendifferenz der Positionierarme ist vorzugsweise so gewählt, dass von den Positionierelementen aufgenommene Batteriezellen mit ihren Außenkonturen nicht in Berührkontakt stehen und darüber hinaus zwischen den Außenkonturen einen definierten Freiraum d aufweisen. Der Abstand der Positionierelemente auf dem Trägerelement kann insbesondere um den Faktor $\cdot\sqrt{3}$ größer sein als die Längendifferenz der Positionierarme.

Ferner können die Batteriezellenaufnahmen der Mehrzahl an Positionierelementen so zueinander angeordnet sein, dass die Längsachsen von fixierten Batteriezellen parallel zueinander ausrichtbar sind und die Batteriezellen mit ihren äußeren Oberflächen nicht in Berührkontakt stehend zueinander ausrichtbar sind, so dass zwischen benachbarten Batteriezellen jeweils ein Freiraum ausgebildet sein kann.

Darüber hinaus kann das Positionierelement zumindest eine Vakuumleitung aufweisen, welche eine Durchgangsöffnung des Trägerelements mit einer in die Batteriezellenaufnahme mündende Öffnung verbindet. Zwischen der Anlagefläche des Trägerelements und den Anlageabschnitten der Positionierelemente können für ein fluiddichtes Abdichten der Vakuumleitungen jeweils Dichtelemente vorgesehen sein. Vorzugsweise können je Positionierelement zwei Vakuumleitungen vorgesehen sein. Die Vakuumleitungen münden vorzugsweise jeweils in das den Positionierelementen abgewandte Vakuumreservoir auf der Rückseite des Trägerelements.

Weiterhin erfindungsgemäß ist vorgesehen, ein Verfahren zum Herstellen von Batteriezellenmodulen für elektrisch betriebene Fahrzeuge bereitzustellen, mit den Schritten:

- Benachbartes und beabstandetes Aufnehmen von zumindest zwei Batteriezellen mit einer ersten Positioniervorrichtung;
- Benachbartes und beabstandetes Aufnehmen von zumindest zwei Batteriezellen mit einer zweiten Positioniervorrichtung;
- Verfahren der ersten und der zweiten Positioniervorrichtung so, dass die von der ersten Positioniervorrichtung aufgenommenen Batteriezellen in eine beabstandete, gegenüberliegende Position zu den von der zweiten Positioniervorrichtung aufgenommenen Batteriezellen zueinander gebracht werden;
- Verschweißen jeweils einer ersten, von der ersten Positioniervorrichtung aufgenommenen Batteriezelle mit jeweils einer zweiten, der ersten Batteriezelle gegenüberliegenden und von der zweiten Positioniervorrichtung aufgenommenen Batteriezelle mittels jeweils zumindest eines Kontaktblechs zu jeweils einem Batteriezellenpaar, wobei die zumindest zwei benachbarten Kontaktbleche einstückig mit einem die Kontaktbleche verbindenden Kontaktblechverbinder ausgebildet sind.

Dabei kann vorgesehen sein, dass zwei Positioniervorrichtungen gemäß einer der oben beschriebenen Ausgestaltungen verwendet wird, wobei die Positionierarme beider Positioniervorrichtungen komplementär zueinander ausgebildet sein können, so dass gegenüberliegende Positionierarme die gleiche Längendifferenz aufweisen wie benachbarte Positionierarme. Dadurch können sich bei einem Gegenüberbringen der Positioniervorrichtungen jeweils eine lange und eine kurze Ausführung des Positionierelements gegenüberstehen.

Das Aufnehmen der Batteriezellen kann das Greifen mittels eines mechanischen Greifers oder mittels einer Vakuum-betriebenen Vorrichtung umfassen. Das Verfahren der Positioniervorrichtungen kann mittels Schwenkvorrichtungen oder mittels Robotern realisiert werden. Das Verschweißen kann ein Verschweißen an den Oberseiten und/oder den Unterseiten der Batteriezellen beinhalten. Es ist denkbar, dass die aufgenommenen Batteriezellen zunächst an der Ober- oder Unterseite verschweißt werden und die Positioniervorrichtungen anschließend um etwa 180° verschwenkt werden, um im Anschluss die jeweils andere Seite zu verschweißen.

Ferner kann vorgesehen sein, dass weder die jeweils in der ersten und der zweiten Positioniervorrichtung aufgenommenen Batteriezellen noch die sich jeweils gegenüberliegenden Batteriezellen eines Batteriezellenpaars mit ihren äußeren Oberflächen in Berührkontakt stehen, so dass zwischen benachbarten Batteriezellen jeweils ein Freiraum gebildet wird. Der zwischen gegenüberliegenden Batteriezellen gebildete Freiraum entspricht vorzugsweise dem Freiraum zwischen benachbarten Batteriezellen. Vorzugsweise werden die Kontaktbleche und die Kontaktblechverbinder jeweils so festgeschweißt, dass die zwischen den Batteriezellen vor dem Verscheißen vorhandenen Freiräume den Freiräumen nach dem Verschweißen entsprechen. Die Freiräume werden vor dem Schweißen demnach von der
Positioniervorrichtung, und nach dem Verschweißen von
den Kontaktblechen beziehungsweise den Kontaktblechverbindern realisiert.

Insbesondere kann vorgesehen sein, dass das
Verschweißen der Batteriezellen mittels jeweils zumindest eines Kontaktblechs zu jeweils einem Batteriezellenpaar umfasst:

- Verschweißen des zumindest einen Kontaktblechs
  an jeweils der Batteriezellenoberseite der ersten und
  der zweiten Batteriezelle und/oder Verschweißen
  des zumindest einen Kontaktblechs an jeweils der
  Batteriezellenunterseite der ersten und der zweiten
  Batteriezelle.

Das Blech aus einstückig verbundenen Kontaktblechen und Kontaktblechverbindern kann mittels einer Greifvorrichtung gefasst und anschließend für den
nachfolgenden Schweißprozess auf der Anordnung aus
positionierten Batteriezellen ausgerichtet werden. Die
Greifvorrichtung kann ein auf der Blechoberfläche angreifender Vakuumgreifer sein. Alternativ kann die Greifvorrichtung ein mechanischer Greifer sein, der das Blech
seitlich umfasst.

Weitere Eigenschaften, Vorteile und Merkmale
der Erfindung sind in der folgenden Beschreibung bevorzugter Ausführungen der Erfindung anhand der beiliegenden Zeichnungen erkennbar, in denen zeigen:

Fig. 1     eine perspektivische Darstellung einer Ober-
           seite eines Batteriezellenmoduls mit zylindri-
           schen Batteriezellen, die über Kontaktbleche
           und Kontaktblechverbinder miteinander verbunden sind;

Fig. 2     eine perspektivische Ansicht einer Unterseite
           eines Batteriezellenmoduls mit zylindrischen
           Batteriezellen, die über Kontaktbleche und
           Kontaktblechverbinder miteinander verbunden sind;

Fig. 3     eine Draufsicht auf ein Batteriezellenmodul
           mit voneinander beabstandeten Batteriezellen;

Fig. 4     eine perspektivische Darstellung eines einstückig ausgebildeten Zellverbinders bestehend
           aus Kontaktblechen und Kontaktblechverbindern;

Fig. 5     eine perspektivische Ansicht einer Positionierungsvorrichtung mit Positionierarmen und
           Batteriezellenaufnahmen;

Fig. 6     eine Draufsicht auf eine Positioniervorrichtung und Batteriezellenaufnahmen;

Fig. 7     eine Frontansicht einer Positioniervorrichtung
           mit benachbarten Batteriezellenaufnahmen
           und Vakuumgreifern;

Fig. 8     eine perspektivische Rückansicht einer Posi-
           tioniervorrichtung mit auf einem Trägerele-
           ment angeordneten Positionierelementen
           und einem Vakuumreservoir ;

Fig. 9     eine Rückansicht einer Positioniervorrichtung
           mit aufgesetztem Verschlusselement;

Fig. 10    eine Draufsicht auf eine Anordnung zweier
           Positioniervorrichtungen, die so angeordnet
           sind, dass benachbarte Positionierarme jeweils die gleiche Längendifferenz aufweisen
           wie gegenüberliegende Positionierarme;

Fig. 11    ein in einer Positioniervorrichtung aufgenommenes Mikromodul aus einer Vorderansicht;

Fig. 12    ein in einer Positioniervorrichtung aufgenommenes Mikromodul aus einer Rückansicht.

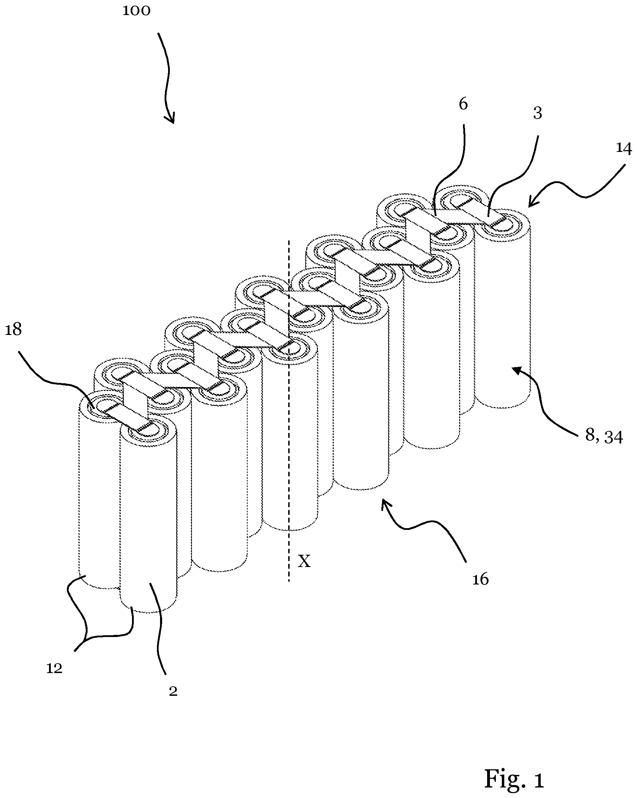

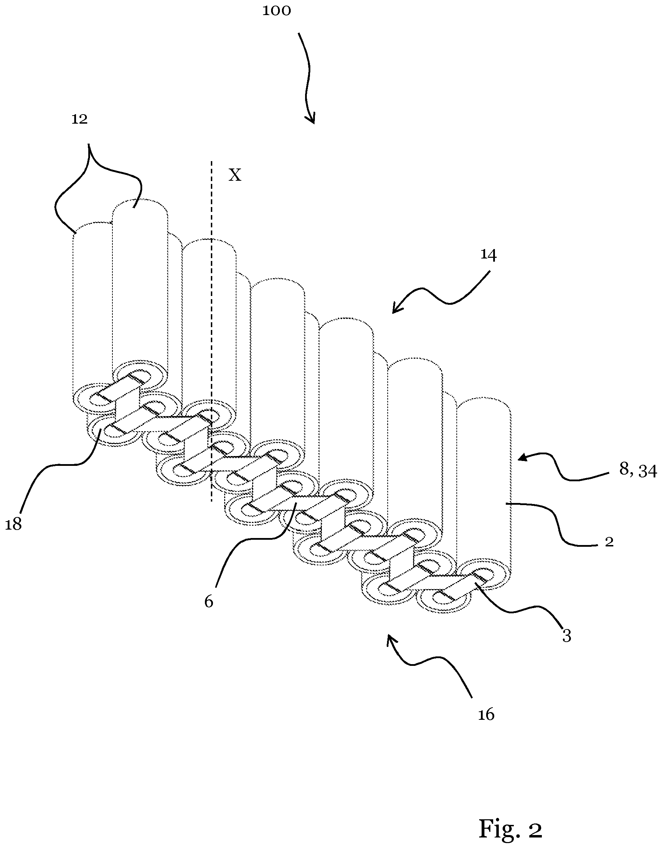

Die Figuren 1 und 2 zeigen jeweils ein Batteriezellenmodul 100 mit einer Mehrzahl an länglichen und
zylindrischen Batteriezellen 2, welche in einer Zweierreihe zickzackförmig angeordnet sind. Die Zickzackform
verläuft so, dass benachbarte Batteriezellenpaare 12 jeweils einen Versatz zueinander aufweisen, wobei sich
die Richtung nach jedem Batteriezellenpaar 12 ändert.
Dabei ragt jeweils eine Batteriezelle 2 eines Batteriezellenpaars 12 in einen oder zwei benachbarte Freiräume
der angrenzenden Batteriezellenpaare 12, je nachdem,
ob das jeweilige Batteriezellenpaar 12 zwischen zwei
weiteren Batteriezellenpaaren 12 oder an der Außenseite des Batteriezellenmoduls 100 angeordnet ist. Die in
die Freiräume ragenden Batteriezellen 2 befinden sich
dabei jeweils auf Höhe des Mittelpunkts zwischen den
Längsachsen X der Batteriezellen 2 der benachbarten
Batteriezellenpaare 12. Die Längsachsen X der Mehrzahl an Batteriezellen 2 sind jeweils parallel zueinander
ausgerichtet. Jeder Batteriezelle 2 der ersten Reihe liegt
jeweils eine Batteriezelle 2 der zweiten Reihe gegenüber,
so dass diese gegenüberliegenden Batteriezellen 2 jeweils ein Batteriezellenpaar 12 bilden. Die Batteriezellenpaare 12 sind jeweils über ein Kontaktblech 3 miteinander verbunden, welches auf jeweiligen Kontaktflächen
18 der Batteriezellen 2 festgeschweißt ist. Die Kontaktbleche 3 sind untereinander über Kontaktblechverbinder
6 verbunden, welche durch eine Rautenform und durch
jeweiliges angewinkeltes Abstehen von den Kontaktblechen 3 den Verlauf der Zickzackform bestimmen. Die
Batteriezellen 2 sind jeweils so zueinander positioniert,
dass die zylindrischen Oberflächen 8 der Batteriezellen
2 nicht in Berührkontakt stehen und jeweils ein Freiraum
10 zwischen den Batteriezellen 2 vorgesehen ist, der für
eine erwartete thermisch induzierte Umfangsausdehnung der Batteriezellen 2 ausgelegt ist. Für die Bemessung des Freiraums 10 ist einerseits die im Betrieb zu erwartende Wärmeausdehnung zu berücksichtigen, andererseits die Ausdehnung der Batteriezellen 2 über ihre Lebensdauer und weiterhin eine Toleranz hinsichtlich der Positionierung der Zellen 2 zueinander im Rahmen des Verschweißvorgangs.

Figur 1 zeigt die Oberseite 14 eines Batteriezellenmoduls 100, wobei zu erkennen ist, dass die Pluspole der Batteriezellen 2 jeweils zur Oberseite 14 hin ausgerichtet sind. Dies ist daran zu erkennen, dass zwischen den Kontaktflächen 18 und der äußeren Berandung der Batteriezellen 2 jeweils eine kreisförmige Nut ausgebildet ist. Das Batteriezellenmodul 100 ist demnach parallel geschaltet. Figur 2 zeigt die Unterseite 16 des Batteriezellenmoduls 100, an welche jeweils die Minuspole der Batteriezellen über jeweilige Kontaktbleche 3 und Kontaktblechverbinder 6 zickzackförmig miteinander verbunden sind. Die Minuspole sind daran zu erkennen, dass die Kontaktflächen 18 eben sind und nicht wie die Pluspole kreisförmige Nuten aufweisen.

Das beabstandete Positionieren der Batteriezellen 2 zueinander und das starre mechanische Verbinden der Batteriezellen 2 über die an Ober-und Unterseite des Batteriezellenmoduls 100 angeschweißten Kontaktbleche 3 sowie die starr mit den Kontaktblechen 3 verbundenen Kontaktblechverbindern 6 hat zur Folge, dass die Batteriezellen 2 über die Kontaktbleche 3 und die Kontaktblechverbinder 6 einerseits kontaktiert sind und andererseits durch diese auf einem für die thermische Ausdehnung der Batteriezellen 2 während des Betriebs notwendigen Abstand zueinander gehalten werden. Die Batteriezellen 2 sind also starr miteinander verbunden, sodass Relativbewegungen verbundener Zellen 2 zueinander verhindert werden.

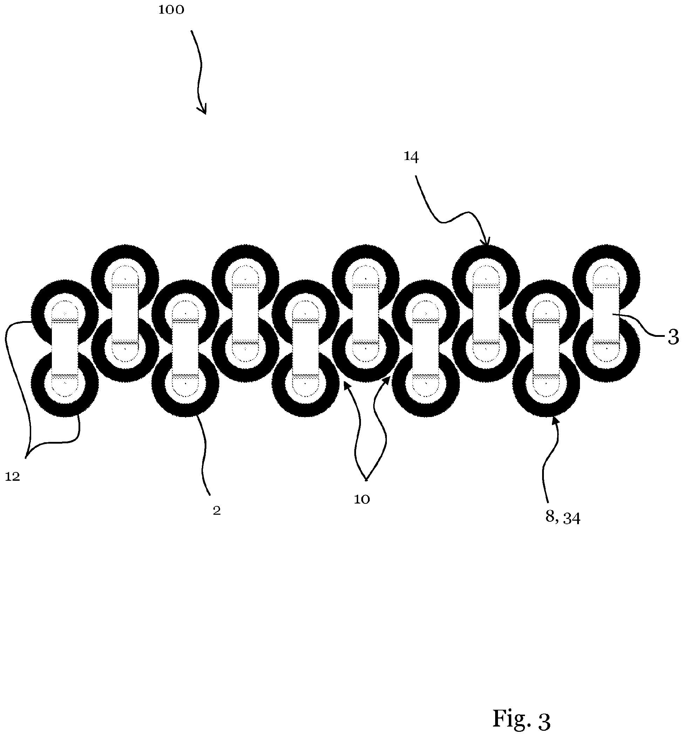

In Figur 3 ist die Draufsicht eines Batteriezellenmoduls 100 dargestellt, wobei die Batteriezellenpaare 12 jeweils über Kontaktbleche 3 miteinander verbunden sind (die Kontaktblechverbinder 6 sind zu Anschauungszwecken nicht dargestellt). Insbesondere ist zu erkennen, dass zwischen sämtlichen Batteriezellen 2 ein Freiraum 10 gebildet ist sodass die äußeren Oberflächen 8 der Batteriezellen 2 nicht in Berührkontakt stehen. Die zickzackförmige Anordnung der Batteriezellen 2 zueinander ist so gewählt, dass die Freiräume 10 der jeweils aneinander angrenzenden Batteriezellen 2 jeweils gleich bemessen sind, bzw., dass die Abstände der äußeren Oberflächen 8 der benachbarten und gegenüberliegenden Batteriezellen 2 im Wesentlichen gleich sind. Dabei ist zu erkennen, dass jeweils eine Batteriezelle 2 eines Batteriezellenpaars 12 in einen oder zwei Freiräume 10 eines oder zweier benachbarter Batteriezellenpaare 12 hineinragt und dass die Längsachsen X dieser Batteriezellen 2 jeweils auf Höhe des Mittelpunkts zwischen den Längsachsen X der Batteriezellen 2 des einen oder beider benachbarter Batteriezellenpaare 12 liegt.

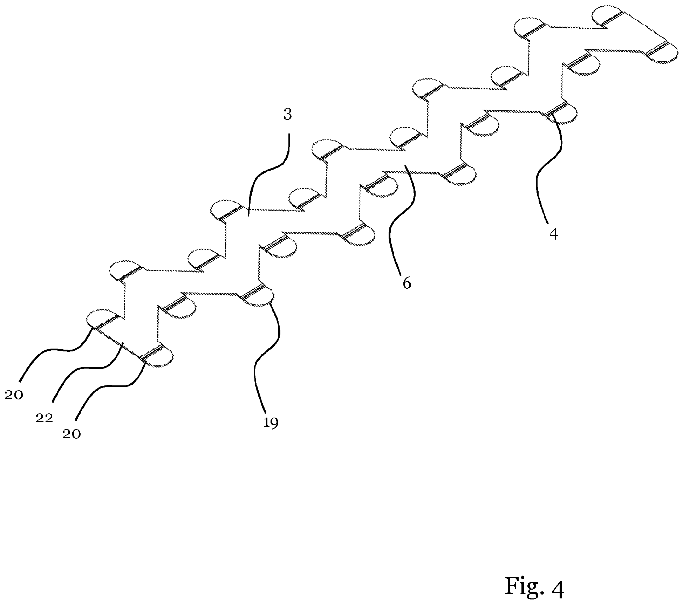

Figur 4 zeigt eine einstückige Ausführungsform eines Blechs beziehungsweise eines Zellverbinders, das eine Mehrzahl an Kontaktblechen 3 sowie eine entsprechende Anzahl an Kontaktblechverbindern 6 aufweist. Das Blech weist durch die schräg verlaufenden Kontaktblechverbinder 6 die zuvor beschriebene zickzackförmige Kontur auf. Jedes der Kontaktbleche 3 weist einen Mittelsteg 22 sowie jeweils zwei Kontaktabschnitte 20 auf, wobei die Kontaktabschnitte 20 dazu vorgesehen sind, an die Kontaktflächen 18 der Batteriezellen 2 angeschweißt zu werden. Zur Anpassung an die zylindrischen Batteriezellen 2 und deren kreisrunden Kontaktflächen 18 weisen die Kontaktabschnitte 20 jeweils kreisförmige Endabschnitte auf. Der Mittelsteg 22 verbindet die zwei Kontaktabschnitte 20 und ist so bemessen, dass er die zu verbindenden Batteriezellen 2 überspannt und darüber hinaus den vorzusehenden Freiraum 10 überbrückt. In der dargestellten Ausführungsform sind die Kontaktabschnitte 20 förmig vom Mittelsteg 22 abgekantet. Dies ist insbesondere dann notwendig, wenn die Kontaktflächen 18 über der äußeren Berandung der Batteriezellen 2 versenkt sind.

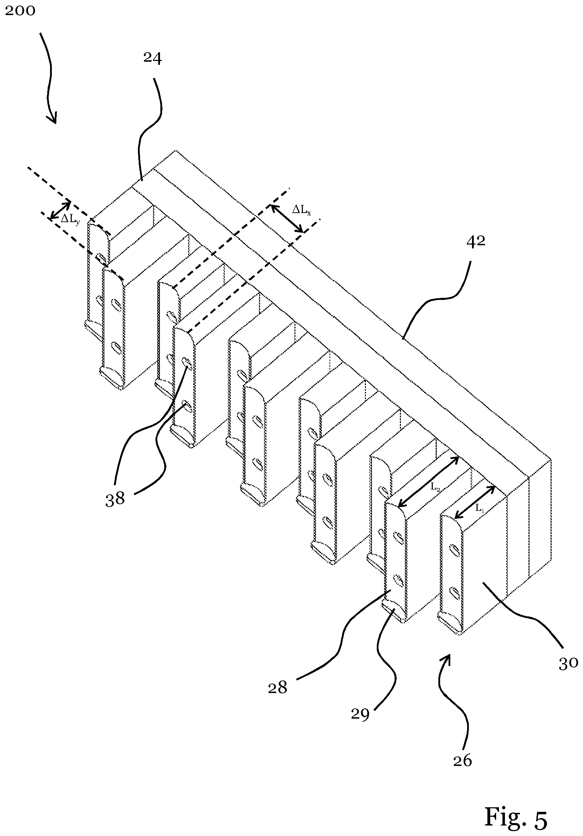

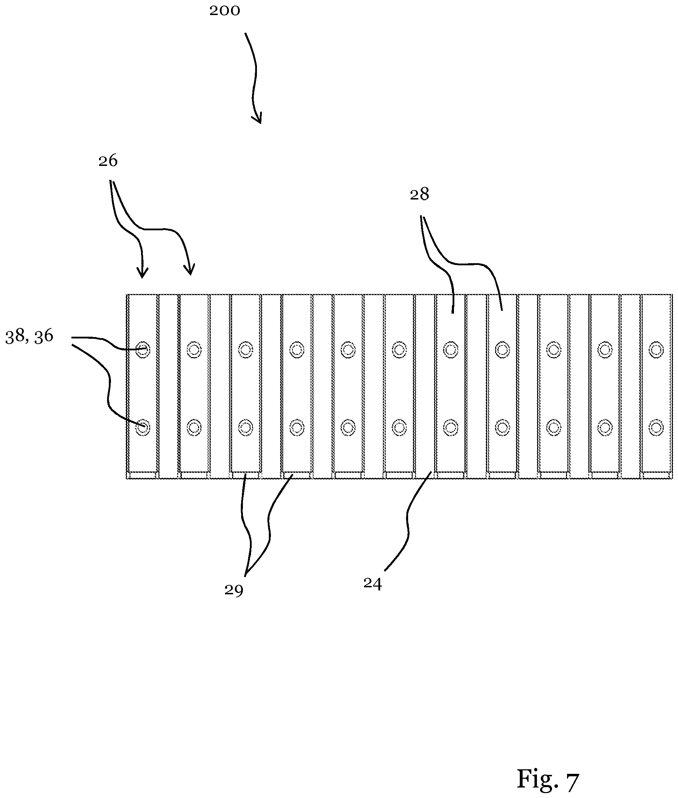

Die Figuren 5-12 zeigen die Positioniervorrichtung 200. Diese weist eine Trägerplatte 24 auf, auf welcher in den gezeigten Ausführungsformen jeweils elf Positionierelemente 26 parallel zueinander angeordnet sind. Die Anzahl an Positionierelementen 26 auf der Trägerplatte 24 kann jedoch in beliebiger Weise nach unten oder oben skaliert werden. Jedes Positionierelement 26 weist einen Positionierarm 30 auf, welcher auf der Trägerplatte 24 befestigt ist oder einstückig mit dieser ausgebildet ist. Am der Trägerplatte 24 abgewandten Ende der Positionierelemente 26 ist jeweils eine Batteriezellenaufnahme 28 vorgesehen. Die Batteriezellenaufnahmen 28 weisen in den dargestellten Ausführungsformen jeweils zwei Vakuumgreifer zum Aufnehmen und Halten von Batteriezellen 2 bzw. zum späteren Abladen verschweißter Batteriezellenmodule 100 auf. Alternativ ist denkbar, dass die Batteriezellenaufnahmen 28 andere Mittel zum Halten von Batteriezellen 2 aufweisen, sowie Permanentmagnete oder Elektromagnete. Für das umfangsseitige Greifen von Batteriezellen 2 weisen die Batteriezellenaufnahmen 28 jeweils eine Anlagefläche mit einer konkaven Form auf Die Anlagefläche erstreckt sich in Längsrichtung über zumindest die Hälfte der aufzunehmenden Batteriezellen 2. Die Anlagefläche der Batteriezellenaufnahme 28 erstreckt sich bis maximal zur Hälfte um den Umfang der aufzunehmenden Batteriezelle 2. Die konkave Form dient insbesondere dazu, die Batteriezellen 2 in der jeweiligen Batteriezellenaufnahme 28 korrekt parallel und im richtigen Abstand zu den anderen gegriffenen Batteriezellen 2 auszurichten. Wenn eine Batteriezelle 2 also unbeabsichtigt außermittig oder nicht parallel zur Batteriezellenaufnahme 28 gegriffen werden sollte, sorgt die konkave Form der Batteriezellenaufnahme 28 dafür, dass die Batteriezelle 2 in Richtung der Vakuumgreifer oder der Magneten gezogen wird. Die aufgenommene Batteriezelle 2 wird damit in der Batteriezellenaufnahme 28 zentriert. Am unteren Ende jeder Batteriezellenaufnahme 28 ist ein Anschlag vorgesehen, der in den dargestellten Ausführungsformen in Form einer vorspringenden Lippe 29 ausgebildet ist. Dieser Anschlag dient dazu, die gegriffenen Batteriezellen 2 jeweils in den Batteriezellenaufnahmen 28 in Längsrichtung zu zentrieren zu können. Es kann vorkommen, dass die aufgenommenen Batteriezellen 2 zwar wie oben beschrieben seitlich zueinander und parallel ausgerichtet sind, diese jedoch in unterschiedlichen Höhen in den jeweiligen Batteriezellenaufnahmen 28 gehalten werden bzw. unterschiedliche Abstände zu den Lippen 29 aufweisen. Um die Zellen 2 auf eine Höhe zu zentrieren, kann vorgesehen sein, die aufgenommenen Batteriezellen 2 kurz loszulassen, so dass diese durch ihre Gewichtskraft entlang der Anlageflächen auf die jeweiligen Anschläge heruntergleiten. Loslassen bedeutet in dem Zusammenhang, den Griff durch die Vakuumgreifer oder den Elektromagneten zu lösen oder zumindest zu lockern. Alternativ kann vorgesehen sein, dass die Batteriezellen 2 im gegriffenen Zustand mittels eines Niederhalters, beispielsweise in Form einer Platte, auf die Anschläge 29 runtergedrückt werden.

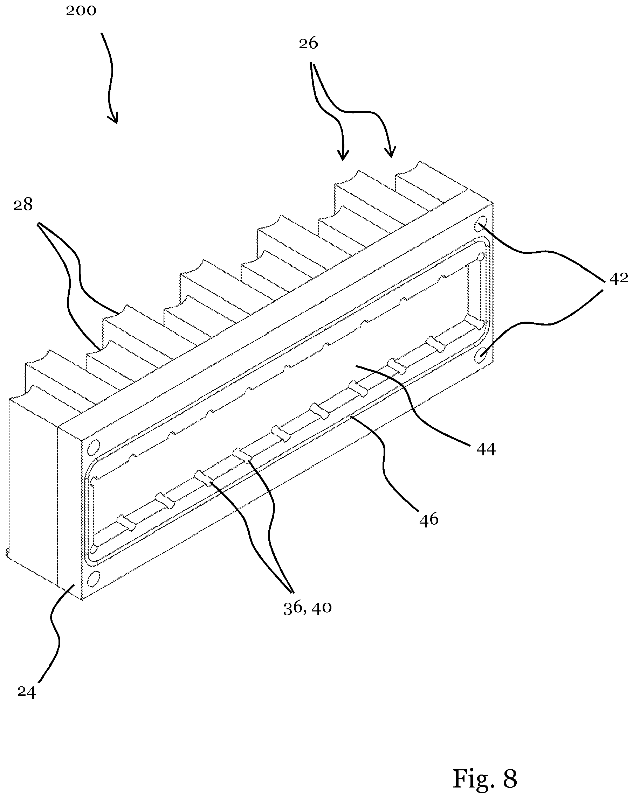

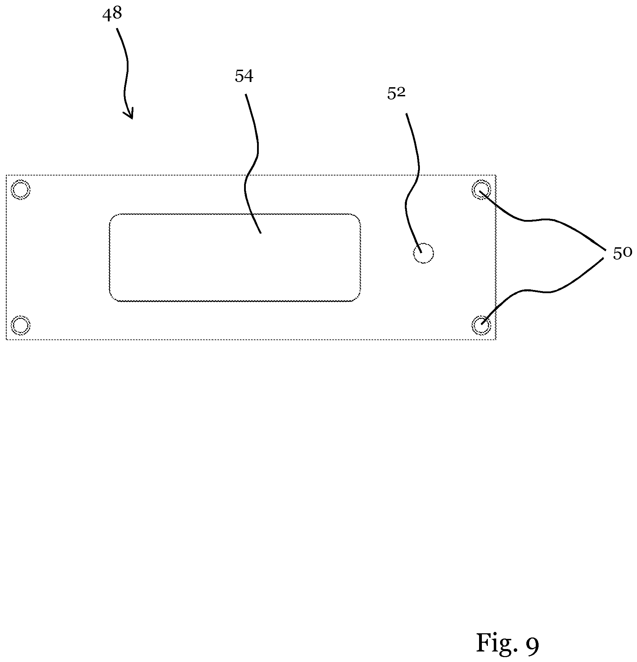

Die Vakuumgreifer sind so ausgestaltet, dass die Anlageflächen der Batteriezellenaufnahmen 28 jeweils Öffnungen 38 aufweisen, welche in Vakuumleitungen münden, die in den Positionierarmen 30 vorgesehen sein können, wie die Figuren 5-7 zeigen. Diese Vakuumleitungen 36 münden trägerplattenseitig in Durchgangsöffnungen 40, welche in Figur 8 dargestellt sind und auf der Rückseite der Trägerplatte 24 in ein Vakuumreservoir 44 münden, über welches der benötigte Unterdruck für die Positionierelemente bereitgestellt werden kann. Das Vakuumreservoir 44 erstreckt sich rückseitig der Trägerplatte 24 entsprechend der seitlichen Ausbreitung der Positionierelemente 26 und der Anordnung der Vakuumgreifer in Längsrichtung der aufzunehmenden Batteriezellen 2 in den jeweiligen Batteriezellenaufnahmen 28. Zum fluiddichten Verschließen des Vakuumreservoirs 44 ist eine das Reservoir ringförmig umlaufende Ringdichtung 46 vorgesehen. Figur 9 zeigt ein Verschlusselement 48 zum Verschließen des Vakuumreservoirs 44, welches über Durchgangsbohrungen 50 in korrespondierende Gewindebohrungen 42 in der Trägerplatte 24 an der Trägerplatte 24 befestigt werden kann. Das Verschlusselement 48 weist ferner einen Vakuumanschluss 52 in Form einer in das Vakuumreservoir 44 mündenden Durchgangsbohrung auf. Über den Vakuumanschluss 52 kann das Vakuumreservoir evakuiert werden und davon ausgehend die in den Batteriezellenaufnahmen 28 angeordneten Vakuumgreifer angesteuert werden. Ferner weist das Verschlusselement eine Aufnahme 54 auf, über welche die Einheit aus Positionierelementen 26, Trägerplatte 24 und Verschlusselement 48 mittels eines Handlingmoduls gegriffen und fixiert werden kann.

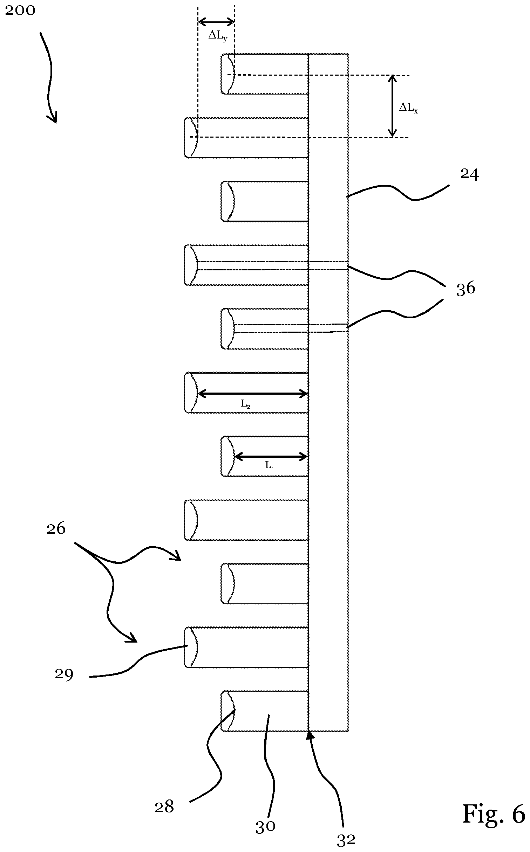

In den Figuren 5 und 6 ist weiterhin dargestellt, dass jeweils benachbarte Positionierarme 30 eine Längendifferenz $\Delta L_y$, aufweisen, welche sich aus der Längendifferenz $L_2$-$L_1$ der Positionierarme ergibt. Ferner ist gezeigt, dass die Positionierelemente 26 jeweils seitlich einen Abstand $\Delta L_x$ voneinander aufweisen. Wenn zwischen allen Batteriezellen 2 jeweils der gleiche Freiraum d vorgesehen ist und die Batteriezellen 2 jeweils den gleichen Zelldurchmesser Z aufweisen, ist der seitliche Abstand $\Delta L_x$ zwischen den Positionierelementen 26 um den Faktor $\sqrt{3}$ größer als die Längendifferenz $\Delta L_y$, der Positionierarme. Dies ergibt sich daraus, dass bei jeweils gleichen Abständen d benachbarter Batteriezellen 2 mit jeweils demselben Zelldurchmesser Z deren Längsachsen X j eweils ein gleichseitiges Dreieck bilden, dessen innere Winkel $\alpha$ allesamt 60° betragen. Daraus resultiert für den seitlichen Abstand $\Delta L_x$ der Positionierelemente 30:

$$\Delta L_x = (Z + d) \times \sin(\alpha)$$

und für die Längendifferenz $\Delta L_y$, der Positionierarme 30:

$$\Delta L_y = (Z + d) \times \cos(\alpha),$$

so dass bei einem Winkel von 60° der Faktor:

$$\frac{\Delta Lx}{\Delta Ly} = \sqrt{3} \text{ folgt.}$$

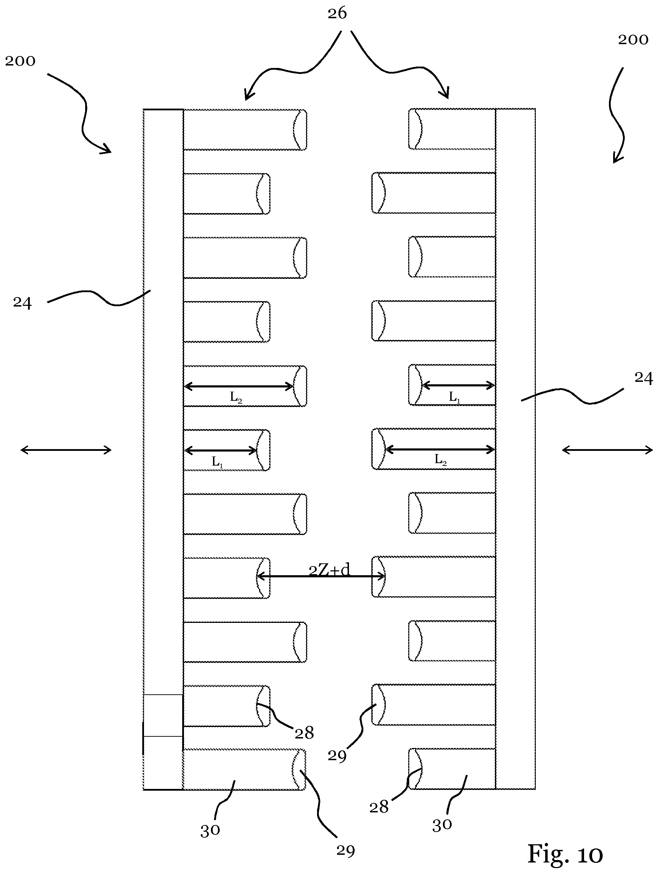

Figur 10 zeigt beispielhaft eine Anordnung zweier Positioniervorrichtungen 200 zueinander, welche zur Herstellung eines Batteriezellenmoduls 100 notwendig ist. Dabei wird eine erste Positioniervorrichtung 200 einer zweiten Positioniervorrichtung 200 derart gegenüber positioniert, dass die Positionierelemente 26 jeweils aufeinander zuweisen. Die Positioniervorrichtungen 200 sind ferner komplementär zueinander ausgebildet, so dass jedem Positionierelement 26 der Länge $L_2$ der ersten Positioniervorrichtung 200 gegenüberliegend ein Positionierelement 26 der Länge $L_1$ der zweiten Positioniervorrichtung 200 zugeordnet ist und jedem Positionierelement 26 der Länge $L_1$ der ersten Positioniervorrichtung 200 gegenüberliegend ein Positionierelement 26 der Länge $L_2$ der zweiten Positioniervorrichtung 200 zugeordnet ist. Dadurch weisen jeweils benachbart auf der Trägerplatte 24 der ersten oder der zweiten Positioniervorrichtung 200 angeordnete Positionierelemente 26 dieselbe Längendifferenz $\Delta L_y$, wie jeweils gegenüberliegende Positionierelemente 26 der ersten und der zweiten Positioniervorrichtung 200 auf. Die Anzahl an Positionierelementen der Länge $L_1$ der ersten Positioniervorrichtung 200 entspricht dabei der Anzahl an Positionierelementen der Länge $L_2$ der zweiten Positioniervorrichtung 200 und umgekehrt.

Zur Herstellung der Batteriezellenmodule 100 nimmt jede Positioniervorrichtung 100 über ihre Batteriezellenaufnahme 28 jeweils eine Mehrzahl an Batteriezellen 2 auf. Die zylindrischen und länglichen Batteriezellen 2 werden dabei umfangsseitig gegriffen, so dass die zylindrische Mantelfläche der Batteriezellen 2 an der konkaven Anlagefläche der Batteriezellenaufnahmen 28 anliegt und die Längsachsen X der Batteriezellen 2 parallel zueinander ausgerichtet sind. Dabei können vorzugsweise sämtliche Pluspole der aufgenommenen Zellen 2 nach oben und sämtliche Minuspole nach unten ausgerichtet sein oder umgekehrt. Zur Aufnahme der Batteriezellen 2 können die Positioniervorrichtungen 200 über Handlingmodule in mehreren Achsen linear bewegt oder verschenkt werden. Wenn die Batteriezellen 2 jeweils von den Positioniervorrichtungen 200 gegriffen sind, werden diese so gegenüber positioniert, dass sich die Batteriezellen 2 beider Positioniervorrichtungen 200 auf derselben Höhe befinden und alle Achsen X der Zellen 2 parallel zueinander ausgerichtet sind. Darüber hinaus weisen die Pluspole und die Minuspole aller gegriffener Batteriezellen 2 vorzugsweise jeweils in dieselbe Richtung. Die Positioniervorrichtungen 200 werden so gegenüber positioniert, dass zwischen den jeweils gegenüberliegenden Batteriezellen 2 jeweils ein Freiraum d verbleibt und die äußeren Oberflächen der Batteriezellen 2 nicht in Berührkontakt stehen. Entsprechend beträgt der Abstand zweier Batteriezellenaufnahmen zueinander 2Z + d, sobald die Positioniervarrichtungen in ihre endgültige Abstandsposition verfahren sind. Wobei die endgültige Abstandsposition den Abstand beschreibt, in welchem die aufgenommenen Batteriezellen 2 über den Zellverbinder miteinander verschweißt werden. Anschließend werden die Batteriezellen 2 über die Anschläge bzw. die Lippen 29 auf eine Höhe zentriert. Diese Position der Zellen zueinander entspricht nun der gewünschten Positionierung im verschweißten Zustand. Auf die gegenüber positionierten Batteriezellen 2 wird im Folgenden das vorzugsweise einstückige Blech bestehend aus Kontaktblechen 3 und Kontaktblechverbindern 6 aufgelegt und so positioniert, dass jeder Kontaktfläche 18 jeder Batteriezelle 2 jeweils ein Kontaktabschnitt 20 zugeordnet ist. Alternativ können vereinzelte Kontaktbleche 3 und Kontaktblechverbinder 6 verwendet werden. Anschließend werden die Kontaktabschnitte 20 jeweils an der zugeordneten Kontaktfläche 18 festgeschweißt.

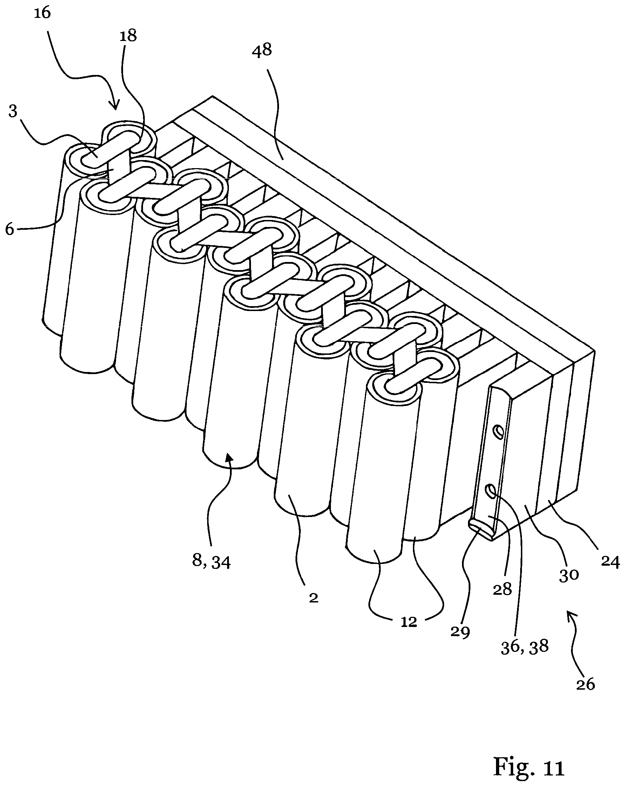

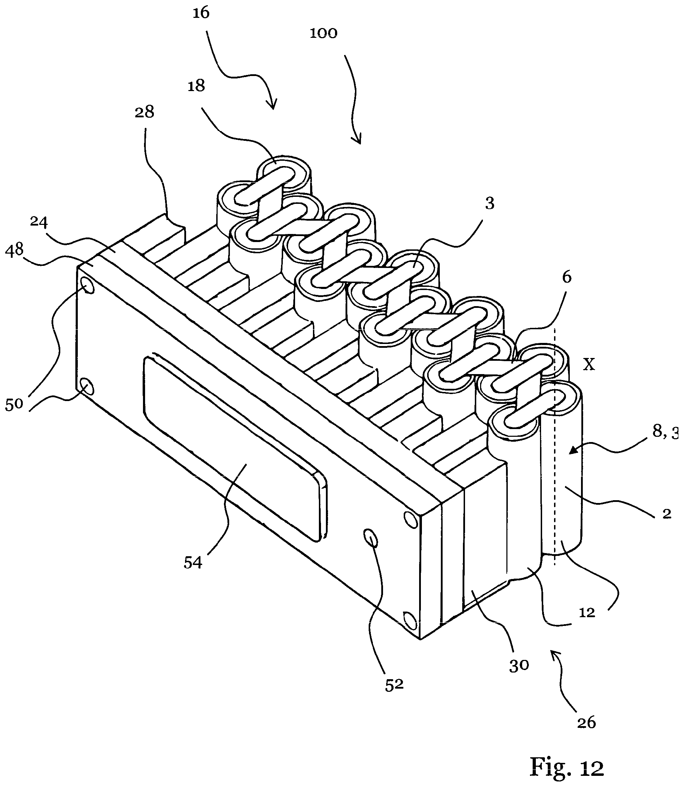

Die Figuren 11 und 12 zeigen beispielhaft ein von einer Positioniervorrichtung 200 gehaltenes Batteriezellenmodul 100, bei welchem die Batteriezellen 2 über die angeschweißten Kontaktbleche 3 bzw. die Kontaktblechverbinder 6 mechanisch starr und elektrisch miteinander verbunden sind, wobei zwischen allen benachbarten und gegenüberliegenden Zellen 2 jeweils ein Freiraum d gebildet ist, so dass sich die einzelnen Zellen 2 nicht berühren. Zu Anschauungszwecken ist eines der dargestellten Positionierelemente 26 nicht belegt. Zum Ablegen des Moduls 100 wird dieses gehalten von einer Positioniervorrichtung 100 mittels des Handlingmoduls an einen Zielort überführt und dort durch Beaufschlagen der Vakuumgreifer mit Luft oder durch Unterbrechen der Spannung der Elektromagneten abgelegt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

Bezugszeichenliste

| 100 | Batteriezellenmodul |
| 200 | Positioniervorrichtung |
| 2 | Batteriezelle |
| 3 | Kontaktblech |
| 4 | stufenförmige Abkantung |
| 6 | Kontaktblechverbinder |
| 8 | Oberflächen der Batteriezellen |
| 10 | Freiraum |
| 12 | Batteriezellenpaare |
| 14 | Batteriezellenoberseite |
| 16 | Batteriezellenunterseite |
| 18 | Kontaktflächen |
| 19 | kreisförmiger Endabschnitt |
| 20 | Kontaktabschnitte |
| 22 | Mittelsteg |
| 24 | Trägerelement |
| 26 | Positionierelement |
| 28 | Batteriezellenaufnahme |
| 29 | Lippe |
| 30 | Positionierarm |
| 34 | Außenumfangsabschnitt |
| 36 | Vakuumleitung |
| 38 | Öffnung |
| 40 | Durchgangsöffnung |
| 42 | Bohrung |
| 44 | Vakuumreservoir |
| 46 | Dichtung |
| 48 | Verschlusselement |
| 50 | Bohrung |
| 52 | Vakuumanschluss |
| 54 | Roboteraufnahme |
| X | Längsachse |
| $L_1$ | Länge des ersten Positionierelements |
| $L_2$ | Länge des zweiten Positionierelements |
| $\Delta L_x$ | seitlicher Abstand Positionierarme |
| $\Delta L_y$, | Längendifferenz Positionierarme |

Patentansprüche

1. Batteriezellenmodul (100) für elektrisch betriebene Fahrzeuge, mit einer Mehrzahl länglicher zylindrischer Batteriezellen (2), deren Längsachsen (X) parallel zueinander ausgerichtet sind, wobei die Batteriezellen (2) so angeordnet sind, dass eine erste Reihe von Batteriezellen (2) parallel zu einer zweiten Reihe von Batteriezellen (2) verläuft, so dass sich jeweils zwei Batteriezellen (2) paarweise gegenüberliegen, wobei die Batteriezellen (2) jeweils so zueinander positioniert sind, dass die zylindrischen Oberflächen (8) der Batteriezellen (2) nicht in Berührkontakt stehen und jeweils ein Freiraum (10) zwischen den Batteriezellen (2) vorgesehen ist, der für eine erwartete thermisch induzierte Umfangsausdehnung der Batteriezellen (2) ausgelegt ist; wobei die jeweils gegenüberliegenden Batteriezellen (2) mittels zumindest jeweils eines Kontaktblechs (3) elektrisch und mechanisch starr miteinander verbunden sind;

und wobei jeweils benachbarte Kontaktbleche (3) mittels jeweils zumindest eines Kontaktblechverbinders (6) elektrisch und mechanisch starr miteinander verbunden sind, wobei die jeweils durch das zumindest eine Kontaktblech (3) miteinander verbundenen Batteriezellen (2) durch das jeweilige, zumindest eine Kontaktblech (3) zueinander beabstandet gehalten sind, und wobei die jeweils durch den zumindest einen Kontaktblechverbinder (6) miteinander verbundenen Batteriezellenpaare (12) durch den jeweiligen, zumindest einen Kontaktblechverbinder (6) zueinander beabstandet gehalten sind.

2. Batteriezellenmodul (100), nach Anspruch 1, wobei benachbarte Batteriezellenpaare (12) so versetzt zueinander angeordnet sind, dass die erste und die zweite Reihe von Batteriezellen (2) parallel in einer Zickzackform verlaufen.

3. Batteriezellenmodul (100) nach Anspruch 2, wobei die Zickzackform so gewählt ist, dass die Längsachsen (X) aller jeweils aneinander angrenzenden Batteriezellen (2) den gleichen Abstand zueinander aufweisen.

4. Batteriezellenmodul (100) nach einem der Ansprüche 1 bis 3, wobei die Batteriezellen (2) entlang ihrer Längsachsen (X) beabstandet voneinander an ihren Oberseiten (14) und ihren Unterseiten (16) jeweils Kontaktflächen (18) aufweisen, wobei das zumindest eine Kontaktblech (3) der mittels Kontaktblech (3) verbundenen Batteriezellen (2) jeweils an beiden Oberseiten (14) und/oder an beiden Unterseiten (16) an den jeweiligen Kontaktflächen (18) der verbundenen Batteriezellen (2) befestigt, insbesondere verschweißt, ist.

5. Batteriezellenmodul (100) nach einem der vorangehenden Ansprüche, wobei der zumindest eine Kontaktblechverbinder (6) einstückig mit den durch diesen verbundenen, zueinander benachbarten, Kontaktblechen (3) ausgebildet ist.

6. Batteriezellenmodul (100) nach einem der vorangehenden Ansprüche, wobei das zumindest eine Kontaktblech (3) zwei Kontaktabschnitte (20) und einen die Kontaktabschnitte (20) verbindenden Mittelsteg (22) aufweist, wobei die Kontaktabschnitte (20) endseitig abgerundet sind.

7. Positioniervorrichtung (200) für die Herstellung von Batteriezellenmodulen (100) für elektrisch betriebene Fahrzeuge nach einem der Ansprüche 1 bis 6, mit einem Trägerelement (24) zum Halten von einer Mehrzahl an Positionierelementen (26), wobei zumindest eines der Positionierelemente (26) zumindest eine von dem Trägerelement (24) wegweisende Batteriezellenaufnahme (28) sowie zumindest einen Positionierarm (30) aufweist, welcher mit seiner der Batteriezellenaufnahme (28) abgewandten Seite mit dem Trägerelement (24) verbunden ist, wobei die zumindest eine Batteriezellenaufnahme (28) zum Aufnehmen und/oder Fixieren eines Außenumfangsabschnitts (34) einer länglichen zylindrischen Batteriezelle (2) ausgebildet ist.

8. Positioniervorrichtung (200) nach Anspruch 7, wobei die Mehrzahl an Positionierelementen (26) nebeneinander beabstandet auf dem Trägerelement (24) angeordnet ist, wobei die Positionierarme (30) benachbarter Positionierelemente (26) eine Längendifferenz ($\Delta$L) aufweisen, so dass die Batteriezellenaufnahmen (28) unterschiedlich weit vom Trägerelement (24) wegweisen.

9. Positioniervorrichtung (200) nach Anspruch 7 oder 8, wobei die Batteriezellenaufnahmen (28) der Mehrzahl an Positionierelementen (26) so zueinander angeordnet sind, dass die Längsachsen (X) von fixierten Batteriezellen (2) parallel zueinander und die Batteriezellen (2) mit ihren äußeren Oberflächen (8) nicht in Berührkontakt stehend zueinander ausrichtbar sind, so dass zwischen benachbarten Batteriezellen (2) jeweils ein Freiraum (10) ausbildbar ist.

10. Positioniervorrichtung (200) nach einem der Ansprüche 7 bis 9, wobei die Batteriezellenaufnahme (28) zumindest einen Vakuumgreifer und/oder einen elektromagnetischen Greifer aufweist.

11. Verfahren zum Herstellen von Batteriezellenmodulen (100) für elektrisch betriebene Fahrzeuge mit einer Positioniervorrichtung nach einem der Ansprüche 7 bis 10, mit den Schritten:

- Benachbartes und beabstandetes Aufnehmen von zumindest zwei Batteriezellen (2) mit einer ersten Positioniervorrichtung (200);
- Benachbartes und beabstandetes Aufnehmen von zumindest zwei Batteriezellen (2) mit einer zweiten Positioniervorrichtung (200);

- Verfahren der ersten und der zweiten Positioniervorrichtung (200) so, dass die von der ersten Positioniervorrichtung (200) aufgenommenen Batteriezellen (2) in eine beabstandete, gegenüberliegende Position zu den von der zweiten Positioniervorrichtung (200) aufgenommenen Batteriezellen (2) zueinander gebracht werden;
- Verschweißen jeweils einer ersten, von der ersten Positioniervorrichtung (200) aufgenommenen Batteriezelle (2) mit jeweils einer zweiten, der ersten Batteriezelle (2) gegenüberliegenden und von der zweiten Positioniervorrichtung (200) aufgenommenen Batteriezelle (2) mittels jeweils zumindest eines Kontaktblechs (3) zu jeweils einem Batteriezellenpaar (12), wobei die zumindest zwei benachbarten Kontaktbleche einstückig mit einem die Kontaktbleche (3) verbindenden Kontaktblechverbinder (6) ausgebildet sind.

12. Verfahren nach Anspruch 11, bei dem zwei Positioniervorrichtungen (200) gemäß einem der Ansprüche 8 bis 11 verwendet wird, wobei die Positionierarme (30) beider Positioniervorrichtungen (200) komplementär zueinander ausgebildet sind, so dass gegenüberliegende Positionierarme (30) die gleiche Längendifferenz (ΔL) aufweisen wie benachbarte Positionierarme (30).

13. Verfahren nach Anspruch 11 oder 12, wobei weder die jeweils in der ersten und der zweiten Positioniervorrichtung (200) aufgenommenen Batteriezellen (2) noch die sich jeweils gegenüberliegenden Batteriezellen (2) eines Batteriezellenpaars (12) mit ihren äußeren Oberflächen (8) in Berührkontakt stehen, so dass zwischen benachbarten Batteriezellen (2) jeweils ein Freiraum (10) gebildet wird.

14. Verfahren nach einem der Ansprüche 11 bis 13, wobei das Verschweißen der Batteriezellen (2) mittels jeweils zumindest eines Kontaktblechs (3) zu jeweils einem Batteriezellenpaar (12) umfasst:

- Verschweißen des zumindest einen Kontaktblechs (3) an jeweils der Batteriezellenoberseite (14) der ersten und der zweiten Batteriezelle und/oder Verschweißen des zumindest einen Kontaktblechs an jeweils der Batteriezellenunterseite (18) der ersten und der zweiten Batteriezelle (2).

**Claims**

1. A battery cell module (100) for electrically powered vehicles, having a plurality of elongated cylindrical battery cells (2) whose longitudinal axes (X) are aligned parallel to one another, the battery cells (2) being arranged such that a first row of battery cells (2) runs parallel to a second row of battery cells (2), so that in each case two battery cells (2) are opposite one another in pairs, the battery cells (2) in each case being positioned with respect to one another in such a way that the cylindrical surfaces (8) of the battery cells (2) are not in contact with one another, and in each case a free space (10) being provided between the battery cells (2), which free space (10) is designed for an expected thermally induced circumferential expansion of the battery cells (2);

wherein the respectively opposing battery cells (2) are rigidly connected to one another electrically and mechanically by means of at least one contact plate (3); and wherein respectively adjacent contact plates (3) are electrically and mechanically rigidly connected to one another by means of at least one contact plate connector (6),

wherein the battery cells (2) connected to one another by the at least one contact plate (3) are held at a distance from one another by the respective at least one contact plate (3), and wherein the battery cell pairs (12) connected to one another by the at least one contact plate connector (6) are held at a distance from one another by the respective at least one contact plate connector (6).

2. The battery cell module (100), according to claim 1, wherein adjacent pairs of battery cells (12) are offset from each other such that the first and second rows of battery cells (2) are parallel in a zigzag pattern.

3. The battery cell module (100) according to claim 2, wherein the zigzag shape is selected such that the longitudinal axes (X) of all respectively adjacent battery cells (2) have the same distance from each other.

4. The battery cell module (100) according to one of claims 1 to 3, wherein the battery cells (2) have contact surfaces (18) spaced apart from one another along their longitudinal axes (X) on their upper sides (14) and their lower sides (16) in each case, wherein the at least one contact plate (3) of the battery cells (2) connected by means of contact plates (3) is fastened, in particular welded, to the respective contact surfaces (18) of the connected battery cells (2) on both upper sides (14) and/or on both lower sides (16) in each case.

5. The battery cell module (100) according to one of the preceding claims, wherein the at least one contact sheet connector (6) is formed integrally with the contact sheets (3) connected thereto and adjacent to one another.

6. The battery cell module (100) according to any one of the preceding claims, wherein the at least one contact plate (3) has two contact sections (20) and a central web (22) connecting the contact sections (20), wherein the contact sections (20) are rounded at the ends.

7. A positioning device (200) for producing battery cell modules (100) for electrically powered vehicles according to one of claims 1 to 6, comprising a carrier element (24) for holding a plurality of positioning elements (26), wherein at least one of the positioning elements (26) comprises at least one battery cell receptacle (28) facing away from the carrier element (24), and at least one positioning arm (30) which is connected to the carrier element (24) with its side facing away from the battery cell receptacle (28), wherein the at least one battery cell receptacle (28) is designed to receive and/or fix an outer circumferential portion (34) of an elongated cylindrical battery cell (2).

8. The positioning device (200) of claim 7, wherein the plurality of positioning elements (26) are spaced side-by-side on the support member (24), the positioning arms (30) of adjacent positioning elements (26) having a length difference ($\Delta L$) such that the battery cell receptacles (28) face different distances away from the support member (24).

9. The positioning device (200) according to claim 7 or 8, wherein the battery cell receptacles (28) of the plurality of positioning elements (26) are arranged with respect to each other such that the longitudinal axes (X) of fixed battery cells (2) are parallel to each other and the battery cells (2) can be aligned with their outer surfaces (8) not in contact with each other, so that a free space (10) can be formed between adjacent battery cells (2), respectively.

10. The positioning device (200) according to any one of claims 7 to 9, wherein the battery cell holder (28) comprises at least one of a vacuum gripper and an electromagnetic gripper.

11. A method for producing battery cell modules (100) for electrically powered vehicles with a positioning device according to any one of claims 7 to 10, comprising the steps:

- Adjacent and spaced apart receiving of at least two battery cells (2) with a first positioning device (200);
- Adjacent and spaced receiving of at least two battery cells (2) with a second positioning device (200);
- Moving the first and second positioning devices (200) such that the battery cells (2) received by the first positioning device (200) are brought into a spaced, opposite position to the battery cells (2) received by the second positioning device (200) with respect to each other;
- Welding in each case a first battery cell (2) received by the first positioning device (200) to in each case a second battery cell (2) opposite the first battery cell (2) and received by the second positioning device (200) by means of in each case at least one contact plate (3) to form in each case a battery cell pair (12), the at least two adjacent contact plates being formed integrally with a contact plate connector (6) connecting the contact plates (3).

12. The method according to claim 11, wherein two positioning devices (200) according to any one of claims 8 to 11 are used, wherein the positioning arms (30) of both positioning devices (200) are formed complementary to each other, so that opposing positioning arms (30) have the same length difference ($\Delta L$) as adjacent positioning arms (30).

13. The method of claim 11 or 12, wherein neither the battery cells (2) respectively received in the first and second positioning devices (200) nor the respectively opposing battery cells (2) of a battery cell pair (12) are in contact with their outer surfaces (8), so that a free space (10) is formed between adjacent battery cells (2) respectively.

14. The method of any one of claims 11 to 13, wherein welding the battery cells (2) by means of at least one contact sheet (3) in each case to form a battery cell pair (12) in each case comprises:

- welding the at least one contact plate (3) to the battery cell upper side (14) of the first and the second battery cell in each case and/or welding the at least one contact plate to the battery cell lower side (18) of the first and the second battery cell (2) in each case.

## Revendications

1. Module de cellules de batterie (100) pour des véhicules électriques, avec une pluralité de cellules de batterie cylindriques allongées (2), dont les axes longitudinaux (X) sont orientés parallèlement entre eux, dans lequel les cellules de batterie (2) sont disposées de façon à ce qu'une première rangée de cellules de batteries (2) s'étende parallèlement à une deuxième rangée de cellules de batterie (2), de sorte que deux cellules de batterie (2) se font face par paires, dans lequel les cellules de batterie (2) sont positionnées respectivement les unes par rapport aux autres de façon à ce que les surfaces cylindriques (8) des cellules de batterie (2) n'entrent pas en contact et un espace libre (10) est respectivement prévu entre les cellules de batterie (2), qui est conçu pour une dilatation de la circonférence induite thermique des cellules de batterie (2) ; dans lequel les cellules de batterie (2) qui se font face sont reliées respectivement, électriquement et mécaniquement et de manière rigide entre elles au moyen d'au moins une tôle de contact (3) ;

et dans lequel les tôles de contact (3) respectivement adjacentes sont reliées respectivement, électriquement et mécaniquement et de manière rigide entre elles au moyen d'au moins un connecteur de tôle de contact (6), dans lequel les cellules de batterie (2) reliées entre elles respectivement par l'au moins une tôle de contact (3) sont maintenues distantes entre elles par l'au moins une tôle de contact (3) correspondante, et dans lequel les paires de cellules de batterie (12) reliées entre elles respectivement par l'au moins un connecteur de tôle de contact (6) sont maintenues distantes entre elles par l'au moins un connecteur de tôle de contact (6) correspondant.

2. Module de cellules de batterie (100) selon la revendication 1, dans lequel les paires de cellules de batterie (12) sont disposées de manière décalée entre elles de façon à ce que les première et deuxième rangées de cellules de batterie (2) s'étendent parallèlement en zigzag.

3. Module de cellules de batterie (100) selon la revendication 2, dans lequel le zigzag est choisi de façon à ce que les axes longitudinaux (X) de toutes les cellules de batterie (2) adjacentes présentent la même distance entre elles.

4. Module de cellules de batterie (100) selon l'une des revendications 1 à 3, dans lequel les cellules de batterie (2) présentent respectivement, le long de leurs axes longitudinaux (X), de manière distante entre elles, au niveau de leurs côtés supérieurs (14) et de leurs côtés inférieurs (16) des surfaces de contact (18) respectives, dans lequel l'au moins une tôle de contact (3) des cellules de batterie (2) reliées au moyen d'une tôle de contact (3) est fixée, plus particulièrement soudée, respectivement au niveau des deux côtés supérieurs (14) et/ou au niveau des deux côtés inférieurs (16), aux surfaces de contact (18) respectives des cellules de batterie (2) reliées.

5. Module de cellules de batterie (100) selon l'une des revendications précédentes, dans lequel l'au moins un connecteur de tôle de contact (6) est réalisé d'une seule pièce avec les tôles de contact (3), adjacentes entre elles, reliées par celui-ci.

6. Module de cellules de batterie (100) selon l'une des revendications précédentes, dans lequel l'au moins une tôle de contact (3) comprend deux portions de contact (20) et une nervure centrale (22) reliant les portions de contact (20), dans lequel les portions de contact (20) sont arrondies à leur extrémité.

7. Dispositif de positionnement (200) pour la fabrication de modules de cellules de batteries (100) pour des véhicules électriques selon l'une des revendications 1 à 6, avec un élément de support (24) pour le maintien d'une pluralité d'éléments de positionnement (26), dans lequel au moins un des éléments de positionnement (26) comprend au moins un logement de cellule de batterie (28) opposé à l'élément de support (24) ainsi qu'au moins un bras de positionnement (30) qui est relié, avec son côté opposé au logement de cellule de batterie (28), avec l'élément de support (24), dans lequel l'au moins un logement de cellule de batterie (28) est conçu pour le logement et/ou la fixation d'une portion de circonférence externe (34) d'une cellule de batterie cylindrique allongée (2).

8. Dispositif de positionnement (200) selon la revendication 7, dans lequel la pluralité d'éléments de positionnement (26) sont disposés de manière juxtaposée et distante entre eux sur l'élément de support (24), dans lequel les bras de positionnement (30) d'éléments de positionnement (26) adjacents présentent une différence de longueur (ΔL), de sorte que les logements de cellules de batterie (28) s'étendent à des distances différentes dans la direction opposée à l'élément de support (24).

9. Dispositif de positionnement (200) selon la revendication 7 ou 8, dans lequel les logements de cellules de batterie (28) de la pluralité d'éléments de positionnement (26) sont disposés entre eux de sorte que les axes longitudinaux (X) des cellules de batterie (2) fixées puissent être orientées parallèlement entre eux et que les cellules de batterie (2) puissent être orientées de façon à ce qu'elles n'entrant pas en contact entre elles avec leurs surfaces externes (8), de façon à ce que, entre des cellules de batterie (2) adjacentes, un espace libre (10) puisse être formé.

10. Dispositif de positionnement (200) selon l'une des revendications 7 à 9, dans lequel le logement de cellule de batterie (28) comprend au moins un préhenseur à vide et/ou un préhenseur électromagnétique.

11. Procédé pour la fabrication de modules de cellules de batterie (100) pour des véhicules électriques, avec un dispositif de positionnement selon l'une des revendications 7 à 10, avec les étapes suivantes :

- logement adjacent et à distance d'au moins deux cellules de batterie (2) avec un premier dispositif de positionnement (200) ;
- logement adjacent et à distance d'au moins deux cellules de batterie (2) avec un deuxième dispositif de positionnement (200) ;
- déplacement des premier et deuxième dispositifs de positionnement (200) de façon à ce que les cellules de batterie (2) logées par le premier dispositif de positionnement (200) soient mises entre elles dans une position distante et en face des cellules de batterie (2) logées par le deuxième dispositif de positionnement (200) ;
- soudage respectivement d'une première cellule de batterie (2) logée par le premier dispositif de positionnement (200) respectivement avec une deuxième cellule de batterie (2), qui fait face à la première cellule de batterie (2) et qui est logée par le deuxième dispositif de positionnement (200), respectivement au moyen d'au moins une tôle de contact (3) afin d'obtenir respectivement une paire de cellules de batterie (12), dans lequel les au moins deux tôles de contact adjacentes sont réalisées d'une seule pièce avec un connecteur de tôles de contact (6) reliant les tôles de contact (3).

12. Procédé selon la revendication 11, dans lequel deux dispositifs de positionnement (200) selon l'une des revendications 8 à 11 sont utilisés, dans lequel les bras de positionnement (30) des deux dispositifs de positionnement (200) sont réalisés de manière complémentaire entre eux, de sorte que des bras de positionnement (30) qui se font face présentent la même différence de longueur ($\Delta$L) que des bras de positionnement (30) adjacents.

13. Procédé selon la revendication 11 ou 12, dans lequel ni les cellules de batterie (2) logées respectivement dans les premier et deuxième dispositifs de positionnement (200) ni les cellules de batterie (2), qui se font face, d'une paire de cellules de batterie (12), n'entrent en contact entre elles avec leurs surfaces externes (8), de façon à ce que, entre des cellules de batterie (2) adjacentes, un espace libre (10) soit formé.

14. Procédé selon l'une des revendications 11 à 13, dans lequel le soudage des cellules de batterie (2) au moyen d'au moins une tôle de contact (3) afin d'obtenir une paire de cellules de batterie (12) comprend :

- le soudage de l'au moins une tôle de contact (3) respectivement au côté supérieur de cellule de batterie (14) des première et deuxième cellules de batterie et/ou soudage de l'au moins une tôle de contact respectivement au côté inférieur de cellule de batterie (18) des première et deuxième cellules de batterie (2).

Fig. 1

Fig. 2

Fig. 3

Fig. 4

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7332243 B2
- EP 1689009 A1
- US 20090297892 A1
- US 20110223776 A1
- US 8519715 B2